# EUROPEAN PATENT APPLICATION

(11) **EP 2 362 091 A1**
(43) Date of publication of application: **31.08.2011**
(21) Application number: 10167870.4
(22) Date of filing: 30.06.2010
(51) Int. Cl.: F03D 1/06

(54) **Rotor blade vibration damping system**

(71) Applicant: Envision Energy (Denmark) ApS, 8600 Silkeborg (DK)
(72) Inventor: Rebsdorf, Anders Varming, 8660 Skanderborg (DK)
(74) Representative: Gregersen, Niels Henrik

(57) **Abstract**

A vibration damping system for a wind turbine, said wind turbine comprising a tower, a nacelle on top of said tower, a rotor having a plurality of rotor blades with a length of more than 35 metres, where said rotor blades at a root end are mounted to a hub fixed to a main shaft, said main shaft being mounted in bearings substantially horizontal in said nacelle, where said rotor blades have a pressure side, a suction side, a leading edge and a trailing edge, and further have an outer part comprising a tip end extending away from said hub. Said rotor blades have at, at least a part of said outer part, one or more straight or curved centre lines, said outer part being located in an offset position relative to a straight main centre line, said straight main centre line having a point of origin in the centre of said root end of said rotor blade, said main centre line being mainly perpendicular to said root end.

## Description

### Field of the Invention - License for sale, please contact Envision, Denmark

The present invention relates to a vibration damping system, in particular to a vibration damping system for a wind turbine, said wind turbine comprising a tower, a nacelle on top of said tower, a rotor having a plurality of rotor blades, said rotor blades having a length of more than 35 metres and preferably a length of more than 45 metres, where said rotor blades at a root end are mounted to a hub fixed to a main shaft, said main shaft being mounted in bearings substantially horizontal in said nacelle, where said rotor blades have a pressure side, a suction side, a leading edge and a trailing edge, and further have an outer part comprising a tip end extending away from said hub.

### Background of the Invention

Most modem wind turbines can be operated with a wind speed in the range of approximately 3 to 25 metres per second as they are designed to work within said range. With lower wind speeds the rotor of the turbine might be able to rotate but the necessary power to drive the generator will not be present and thus there will be wearing on the system and no meaningful power generation. At wind speeds above the so called "stop wind" of e.g. 25 metres per second it is commonly known to activate a braking system on the wind turbine or pitch the rotor blades to a non-producing position, to stop the rotor from rotating and to rotate the nacelle up against the wind. In some applications the wind turbine is only stopped and the rotor is more or less free to rotate in some extend. Further the individual rotor blades are rotated, at the interface between the hub and the root end of the blade, more or less about their axis of length in such a manner that the leading edge or in some designs the trailing edge of the rotor blades also is facing up against the wind. This is normally done by using the pitch bearing system or the active stall bearing system that will be used to control the rotor blade during normal operation at wind speeds where the wind turbine can produce power.

When the rotor blades are pointed with the leading edge or the trailing edge against the wind, the rotor blades can have a tendency to start vibrating or oscillating in the edgewise direction, also known as the chordwise direction, under influence of the high wind speed. Such a vibration or oscillation can also occur under approximately +-15 degrees angle of attack (stall induced vibrations) or by an angle of attack of approximately +-90 degrees (vortex shedding).

Such an oscillating movement of the rotor blade will eventually lead to damage on the rotor blade, on the pitch or active stall system and possibly on other parts of the wind turbine as well.

To overcome such oscillating movements several solutions have been tried. From WO 03/054388 A1 it is known to adjust the blades with different "pitch" angles when the turbine is shut down at high wind speeds. Thus avoiding that the blades on the rotor are being exited to vibrate and oscillate with damage as a consequence. The load taken up by the single blades can be counter balanced by the other blades and thus the load on the brake system, on the bearings and on the wind turbine as a whole is minimised. The impact on the individual blades will not be eliminated, but the oscillating movements will however be lowered, as the individual rotor blades do not contribute in the same manner to an overall oscillating of the rotor, where the movements of one blade can intensify the oscillating movements of the other rotor blades and so on.

Another solution is illustrated in EP 0 955 461 A2, from where it is known to have blades with different eigenfrequency, at least in one direction, namely in the edgewise direction. This will have a tendency to stop the rotor from oscillating as the vibrations are stopped due to the uneven "balance" in the rotor. The difference in eigenfrequency is obtained by adding a few layers of fibres with a different direction in one of the blades in a set of three. Also this solution is somewhat insufficient as the rotor blades and also the rest of the wind turbine will undergo unwanted strain and stresses.

Tests have been made on the technology known from EP 0 955 461 A2 and it appears that the eigenfrequency has to have a difference of more than 20 % in one rotor blade compared to the other rotor blades to obtain an effect. At the same time it is important to have the same weight, centre of gravity, aerodynamic shape and performance as the other rotor blades on the wind turbine. This is an almost impossible challenge and gives a complete new set of problems and challenges.

From EP 1 019 631 B1 it is known to shape the rotor blades in a curved manner. This shape is necessary to prevent the rotor blade from hitting the tower of the wind turbine when the rotor blade during use is deflected by the wind. The rotor blades described in this document are described as so flexible that when experiencing high wind speeds the rotor blades will be straightened out or even have a slightly rearward bend towards the tower. This is due to the centrifugal forces acting on the rotor blade during rotation and of course also due to the pressure from the wind. EP 1 019 631 B1 is thus disclosing very flexible rotor blades, where the stiffness is designed to be just high enough to let the rotor blade straighten out at high wind speeds. The shape of the rotor blade and also the stiffness is designed with one specific goal, and that is to prevent the tip of the blade to come into contact with the tower at high wind speeds while the wind turbine is running. Another issue in EP 1 019 631 B1 is the aesthetical appearance of the wind turbine, where it very important that the wind turbine has an overall appearance with a rotor, where the blades are more or less straight and situated in a flat rotor plane.

Although the above mentioned solutions to the oscillation problem are known there still exists a wish for a good and reliable solution, where such an oscillating movement of the rotor blades can be prohibited to a sufficient extend and thereby extending the lifetime of the blades by minimising or eliminating the harmful edgewise oscillations.

### Object of the Invention

It is an object of the invention to provide a vibration damping system for a wind turbine where the rotor blades on said wind turbine during stand still e.g. at wind speeds above the stop wind is facing with the leading edge in a predetermined angle to the wind, where the rotor blades are adapted and/or designed with means that will prohibit the individual blade in reaching its eigenfrequency in the edgewise direction as well as in the flapwise direction.

### Description of the Invention

As mentioned above the invention relates to a vibration damping system for a wind turbine, where the wind turbine comprises a plurality of rotor blades each with an outer part, where said rotor blades at, at least a part of said outer part, have one or more straight or curved centrelines, said outer part being located in an offset position relative to a straight main centre line, said straight main centre line having a point of origin in the centre of said root end of said rotor blade, said main centre line being mainly perpendicular to said root end.

In other words the rotor blade has an inner part with a straight main centre line and an outer part with one or more straight or curved centre lines, as the outer part can be with an angle to the inner part or it can be curved in relation to the inner part.

By having this non-uniform structure of the rotor blades the unwanted oscillating movements of the blade will be limited to a minimum and in some situations it will be completely avoided. This is due to the fact that when a rotor blade starts oscillating, the offset part of the rotor blade will experience a different situation compared to the inner part of the rotor blade. Thus the outer part will tend to twist in relation to the inner part of the rotor blade and torsion of the rotor blade will take place. Torsion in the rotor blade will have the influence that the edgewise oscillations will couple to the flapwise side of the rotor blade and introduce flapwise oscillations. This will prohibit the edgewise oscillations as the rotor blade has a different eigenfrequency in the flapwise direction and also has very large aerodynamic damping characteristics. Thus the edgewise as well as the flapwise oscillations will be limited and minimised or even eliminated.

This situation where edgewise oscillations are coupled to the flapwise side of the structure can be reached by having at least a part of said outer part of a rotor blade located in an offset position in the pressure side direction of said rotor blade. Then said blade will have an overall shape where the outer part and end of the blade is in front of the straight main centre line, having a larger distance to the tower, when the rotor blade is active and the wind turbine is running.

In another embodiment of the invention the vibration damping system for a wind turbine has at least a part of said outer part of a rotor blade located in an offset position in the suction side direction of said rotor blade. Thus the outer part of the rotor blade will have a smaller distance to the tower than if the blade was straight as the main centre line.

In yet another embodiment of the invention the vibration damping system for a wind turbine has at least a part of said outer part of a rotor blade located in an offset position relative to the leading edge and to the trailing edge of said rotor blade but in the same plane as the rest of the rotor blade. The outer part of the rotor blade will thus be with a swept forward or backward design.

In a preferred embodiment of the invention a vibration damping system for a wind turbine according to the invention can have at least a part of said outer part of a rotor blade located in an offset position, said offset position being any possible combination of the offset positions described above. The rotor blade can thus be with an outer part that is curved or angled in the windward direction and at the same time swept back in relation to the rotational direction of the rotor. Alternatively the rotor blade as described can be curved or angled in one or more sections in the direction towards the tower and still be with a swept back tip end.

With a vibration damping system for a wind turbine according to the invention the damper is so to say incorporated in the structure and as such it can not be seen at as a specific part of the rotor blade but merely as a integrated part and feature of a rotor blade where a part of the outer part is offset in relation to the inner part of the rotor blade. The rotor blade can, as mentioned above, be designed in a variety of different shape combinations. It can be partial curved, partial straight in the windward, in the leeward directions, but also in the plane described by the rotor blades straight main centre lines and the rotor blade can of course have the shape of any combination thereof.

When the wind is acting on such a rotor blade the blade will be subject to a kind of twist and thus the oscillations will couple from the edgewise side to the flapwise side and be damped.

A vibration damping system for a wind turbine according to the invention can be with an outer part of the rotor blade, which has a length of approximately 1%, 5%, 10%, 15%, 20%, 25% or 30% of the total length of the rotor blade. Said outer part of the rotor blade being defined as the outer part of the rotor blade where the centre line is not congruent with the straight main centre line.

In a preferred embodiment said outer part of the rotor blade has a length in the range of 15 to 20% of the total length of the rotor blade.

In a preferred embodiment of a vibration damping system for a wind turbine according to the invention, said outer part of the rotor blade has an offset distance in the interval between 1 to 10%, more preferably between 2 to 5% of the total length of the rotor blade. Said offset can be in the windward or in the leeward direction, it can be in back or front swept direction or in any combination thereof.

In a special embodiment of the invention a vibration damping system for a wind turbine according to the invention can be with one or more rotor blades having means that when activated will deform the rotor blade into a non-straight shape and thus offset the outer part. Such means can be activated during stand still of the wind turbine and in situations where there is a risk of harmful oscillation of the rotor blade.

Such means can be mechanical means, e.g. in the shape of a mechanism connected to the interior of the outer part of the rotor blade, said mechanism further has means for activating and deactivating to change the offset of the outer part of said rotor blade.

Another solution for said means is to use electronic means in the shape of smart materials, e.g. such as piezoelectric elements connected to the interior or to the exterior of the outer part of the rotor blade, said electronic means has activating and deactivating means to change the offset of the outer part of said rotor blade.

Another possible solution is to have a stationary structural part installed in the rotor blade or on the surface of the rotor blade, where said stationary structural part is more or less rigid and thus will force the rotor blade to stay in the non-straight shape with an offset outer part. Such a structural part can e.g. be retrofitted inside already existing rotor blades on wind turbines experiencing problems with rotor blades that will oscillate in the edgewise direction during stand still at high wind speed.

Although it is the most preferred solution to have the rotor blade with a more or less smooth surface without any complex features built into it, it is possible to have extendable means that when activated will give an overall change in the shape of the rotor blade. Such means can e.g. be mechanical or electrical unfolded from the rotor blade and perhaps only used in situations where critical oscillations may occur.

### Description of the Drawing

An embodiment of the invention will now be described, by way of example only, with reference to the accompanying drawings, in which:
- Fig. 1: shows parts of a "standard" wind turbine seen from the side.
- Fig. 2: shows parts of a "standard" wind turbine seen from the front.
- Fig. 3: shows parts of a wind turbine seen from the side where the rotor blade has the outer part offset toward the wind.
- Fig. 4: shows parts of the wind turbine in fig. 3 but here seen from the front and with the leading edge of the rotor blade pointed forward.
- Fig. 5: shows parts of a wind turbine where the rotor blade has the outer part offset in a back swept manner.
- Fig. 6: shows parts of the wind turbine in fig. 5 but here seen from the side and with the leading edge of the rotor blade pointed forward.

In the following text the figures will be described one by one and the different parts and positions seen in the figures will be numbered with the same numbers in the different figures. Not all parts and positions indicated in a specific figure will necessarily be discussed together with that figure.

### Detailed Description of the Invention

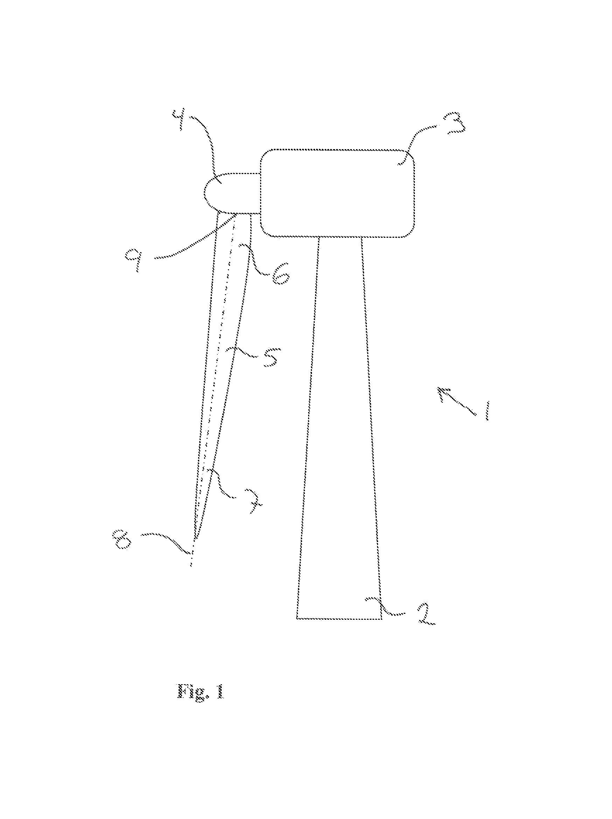

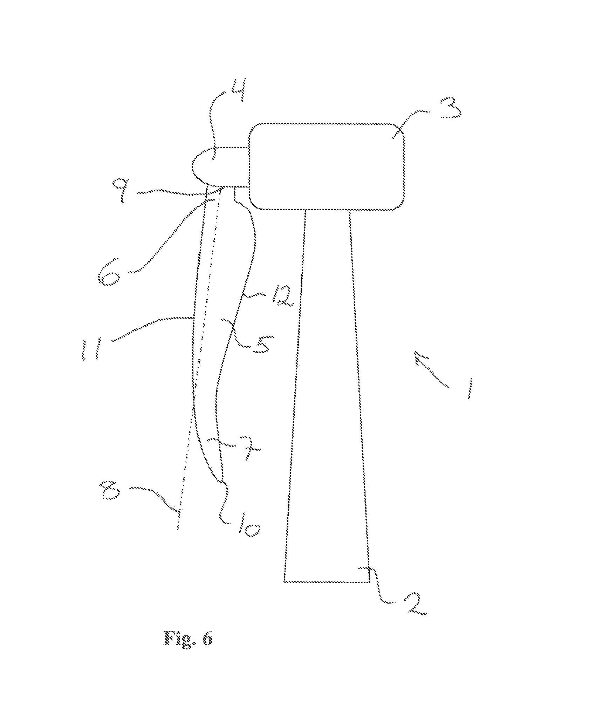

In fig. 1 a wind turbine 1 or at least parts of a wind turbine 1 is seen in a side view. The wind turbine 1 consists of a tower 2, a nacelle 3 with a hub 4 and a plurality of rotor blades 5 - only one shown. From the root end 6 and towards the outer part 7 of the rotor blade 5 a straight main centre line 8 is seen. In this situation the straight main centre line 8 has a slight forward inclination. Such a rotor design is also known as a rotor with a cone shaped rotor plane. The straight main centre line 8 originates from the centre of the root end 6 of the rotor blade 5 and describes the rotor plane when rotated about the substantially horizontal main shaft - not shown - but situated in the nacelle 3 and whereto the hub 4 is connected. Between the root end 6 and the hub 4 there is an interface 9, typical a pitch bearing system, that can rotate the rotor blade 5 around the straight main centre line 8 in order to adjust the rotor blade 5 according to the specific wind conditions.

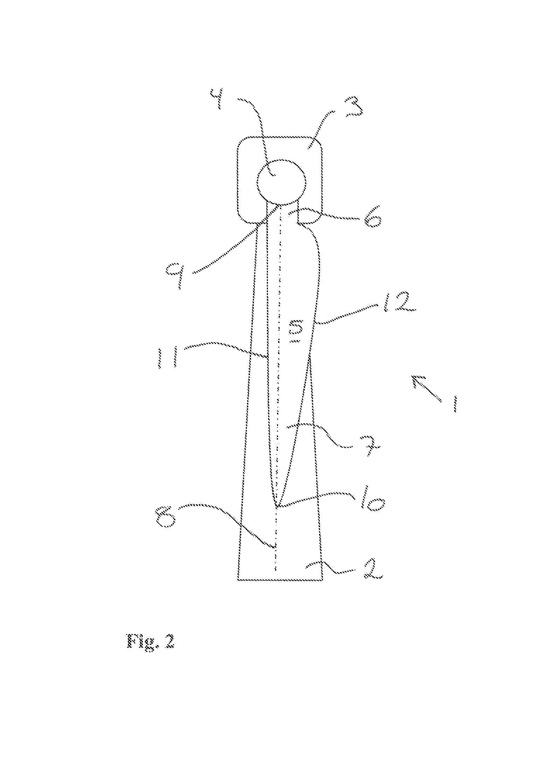

In fig. 2 the same wind turbine 1 as depicted in fig. 1 is seen, but here in a front view. Also in this figure it is clearly seen that the straight main centre line 8 originates from the centre of the rotor blade root 6, more precisely from the centre of the interface 9 between the rotor blade 5 and the hub 4. The outer most tip end 10 of the rotor blade 5 also lies on the straight main centre line 8. Further the leading edge 11 and the trailing edge 12 on the rotor blade 5 is shown.

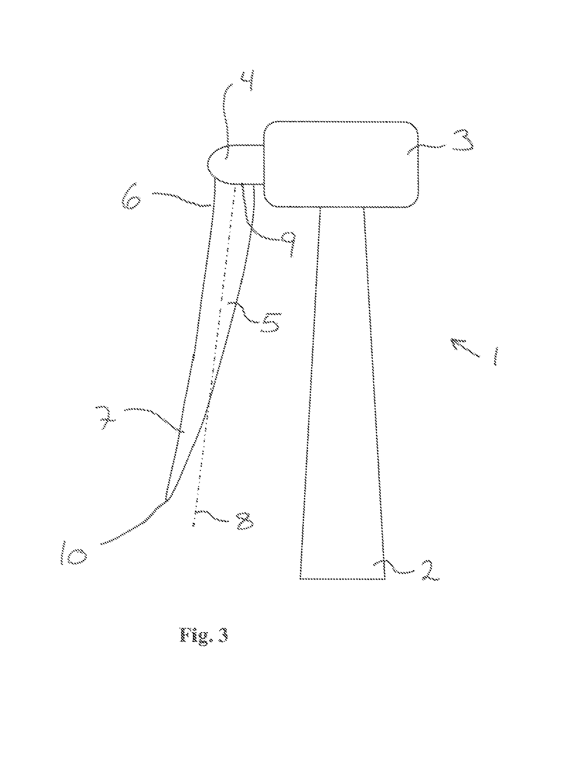

Fig. 3 shows a wind turbine 1, where the outer part 7 of the rotor blade 5 and also the outer most tip end 10 is offset in the windward direction. When a rotor blade 5 like this is rotated about the straight main centre line 8 in such a manner that the leading edge 11 is pointed against the direction of the wind, then the rotor blade 5 will still appear with the outer part 7 in an offset position and beginning oscillations in the rotor blade 5 will be eliminated or highly minimised.

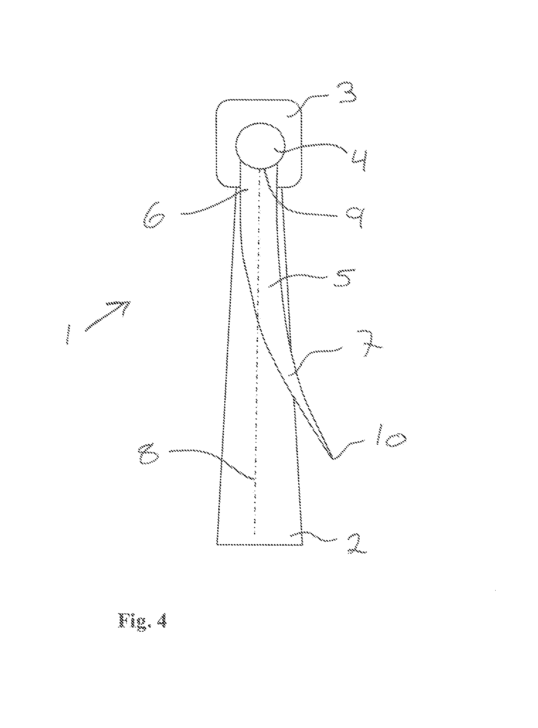

Fig. 4 shows the same wind turbine 1 as seen in fig. 3, but here it is seen from the front and with a rotor blade 5, where the leading edge 11 is pointed forward. In this figure it is clearly seen that the outer part 7 of the rotor blade 5 is in an offset position to the straight main centre line 8.

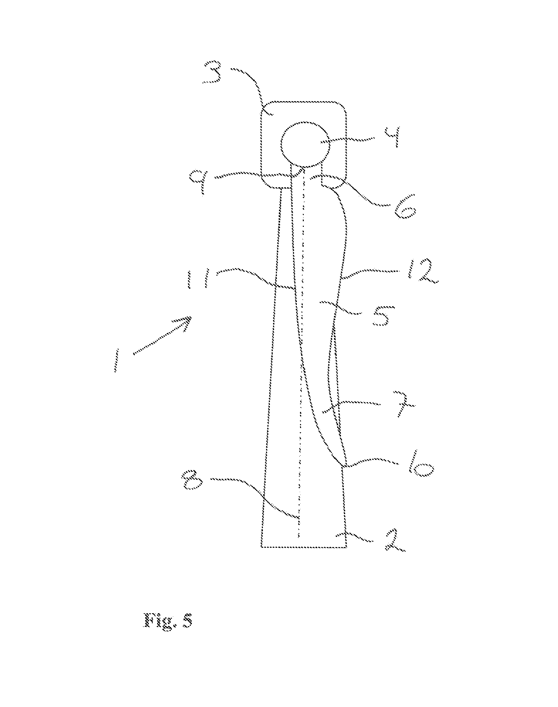

In fig. 5 another embodiment of a wind turbine 1 according to the invention is shown. The wind turbine 1 still comprises a tower 2, a nacelle 3, a hub 4, a rotor blade 5 with a root end 6, with an outer part 7, a leading edge 11 and with a trailing edge 12. Also the straight main centre line 8 is depicted. The rotor blade 5 although has a somewhat different shape as the outer part 7 and also the tip end 10 is seen in an offset and back swept position, which will give a better coupling of edgewise oscillations and vibrations to the flapwise side of the rotor blade 5.
Finally in fig. 6 the same wind turbine 1 as seen in fig. 5 is seen. The rotor blade 5 is in a position where the leading edge 11 is facing forward as if the wind turbine 1 was at a stand still at high wind speeds. In this figure the outer part 7 of the rotor blade 5 is seen offset to the straight main centre line 8 with the tip end 10 pointed towards the tower 2.

The invention is not limited to the embodiments described herein, and may be modified or adapted without departing from the scope of the present invention.

## Claims

1. A vibration damping system for a wind turbine, said wind turbine comprising a tower, a nacelle on top of said tower, a rotor having a plurality of rotor blades, said rotor blades having a length of more than 35 metres and preferably a length of more than 45 metres, where said rotor blades at a root end are mounted to a hub fixed to a main shaft, said main shaft being mounted in bearings substantially horizontal in said nacelle, where said rotor blades have a pressure side, a suction side, a leading edge and a trailing edge, and further have an outer part comprising a tip end extending away from said hub, **characterised in that** said rotor blades have at least a part of said outer part, with one or more straight or curved centre lines, said outer part being located in an offset position relative to a straight main centre line, said straight main centre line having a point of origin in the centre of said root end of said rotor blade, said main centre line being mainly perpendicular to said root end.

2. A vibration damping system for a wind turbine according to claim 1, **characterised in that** at least a part of said outer part of a rotor blade is located in an offset position in the pressure side direction of said rotor blade.

3. A vibration damping system for a wind turbine according to claim 1, **characterised in that** at least a part of said outer part of a rotor blade is located in an offset position in the suction side direction of said rotor blade.

4. A vibration damping system for a wind turbine according to claim 1, **characterised in that** at least a part of said outer part of a rotor blade is located in an offset position relative to the leading edge and to the trailing edge of said rotor blade but in the same plane as the rest of the rotor blade.

5. A vibration damping system for a wind turbine according to any of the claims 1 to 4, **characterised in that** at least a part of said outer part of a rotor blade is located in an offset position, said offset position being any possible combination of the offset positions described in the claims 2, 3 and 4.

6. A vibration damping system for a wind turbine according to any of the claims 1 to 5, **characterised in that** said outer part of the rotor blade has a length of approximately 1%, 5%, 10%, 15%, 20%, 25% or 30% of the total length of the rotor blade.

7. A vibration damping system for a wind turbine according to any of the claims 1 to 6, **characterised in that** said outer part of the rotor blade has an offset distance in the interval between 1 to 10%, more preferably between 2 to 5% of the total length of the rotor blade.

8. A vibration damping system for a wind turbine according to any of the claims 1 to 7, **characterised in that** said rotor blade has means that when activated will deform the rotor blade into a non-straight shape and thus offset the outer part.

9. A vibration damping system for a wind turbine according to claim 8, **characterised in that** said means are mechanical means in the shape of a mechanism connected to the interior of the outer part of the rotor blade, said mechanism further has means for activating and deactivating to change the offset of the outer part of said rotor blade.

10. A vibration damping system for a wind turbine according to claim 8, **characterised in that** said means are electronic means in the shape of smart materials, e.g. such as piezoelectric elements connected to the interior or to the exterior of the outer part of the rotor blade, said electronic means has activating and deactivating means to change the offset of the outer part of said rotor blade.
